# EUROPÄISCHE PATENTSCHRIFT

(11) **EP 3 853 127 B1**
(45) Veröffentlichungstag und Bekanntmachung des Hinweises auf die Patenterteilung: **18.12.2024**
(21) Anmeldenummer: 19769813.7
(22) Anmeldetag: 20.09.2019
(51) Int. Cl.: B64D 11/06, B64D 11/00, B60N 2/00

(54) **SITZSYSTEM FÜR EIN PASSAGIERFLUGZEUG UND VERFAHREN**
SEAT SYSTEM FOR A PASSENGER AIRCRAFT AND METHOD
SYSTÈME DE SIÈGE POUR AVION DE TRANSPORT DE PERSONNES ET PROCÉDÉ

(30) Priorität: 21.09.2018 EP 18196096
(43) Veröffentlichungstag der Anmeldung: 28.07.2021
(73) Patentinhaber: Aircraft Cabin Modification GmbH, 87700 Memmingen (DE)
(72) Erfinder: NOSHARI, Arash, 22605 Hamburg (DE)
(74) Vertreter: Vossius & Partner Patentanwälte Rechtsanwälte mbB
(86) Internationale Anmeldenummer: PCT/EP2019/075366
(87) Internationale Veröffentlichungsnummer: WO 2020/058491

(56) Entgegenhaltungen:
- DE-A1- 102014 223 629
- US-A1- 2004 122 575
- US-A1- 2015 351 692
- US-A1- 2017 251 979
- US-A1- 2017 283 086

## Beschreibung

Die vorliegende Erfindung betrifft ein Sitzsystem für ein Passagierflugzeug und ein Verfahren zum Betreiben eines Sitzsystems.

Üblicherweise wird ein Passagierflugzeug oft als Transportmittel gewählt, wenn es darum geht, lange Distanzen zurückzulegen. Trotz der hohen, üblichen Fluggeschwindigkeit müssen deswegen häufig etliche Stunden von den Menschen in dem Passagierflugzeug verbracht werden. Entsprechend gibt es einen hohen Bedarf, diese Reisezeit komfortabel zu verbringen. Fluggesellschaften, bei welchen das Reiseerlebnis als besonders komfortabel empfunden wird, werden von Passagieren deswegen üblicherweise bevorzugt.

Gleichzeitig ist es jedoch notwendig, die Kosten für einen Flug gering zu halten. Dies kann zum einen durch eine hohe Anzahl Passagiere erreicht werden, wodurch jedoch der individuelle Platz pro Passagier in dem Flugzeug sehr klein ist. Ein weiterer wichtiger Kostentreiber ist das Flugzeuggewicht. Entsprechend sind Fluggesellschaften bestrebt, besonders leichte und kleine Sitze in ihren Flugzeugen zu verbauen, um kosteneffizient operieren zu können. Damit geht jedoch häufig einher, dass solche Sitze für längeres Sitzen als unbequem empfunden werden. Als Folge davon kann das Reisen mit einem solchen Passagierflugzeug bzw. längeres Sitzen auf solchen Sitzen durch die jeweiligen Passagiere als unkomfortabel wahrgenommen werden.

Dabei ist zu beachten, dass der menschliche Körper für längeres Sitzen nicht ausgelegt ist. Durch längere Flugreisen kann deshalb auch eine nicht unerhebliche gesundheitliche Belastung entstehen. Beispielsweise kann langes Sitzen in einer im Wesentlichen unveränderten Position eine Wahrscheinlichkeit für Thrombosen wenigstens temporär erhöhen. Zudem kann jeder Passagier ein unterschiedliches Sitzverhalten haben, wobei gewisse Verhaltensweisen für den Menschen eine größere gesundheitliche Belastung darstellen können und/oder bei jeweiligen Sitzen unbequemer sein können, als andere Verhaltensweisen.

In der DE 10 2006 042 299 A1 ist ein Sitzbelegungssensor in einem Sitzkissen eines Sitzelements eines Passagierflugzeugs beschrieben, mittels welchem ein Sitzbelegungszustand erfasst wird. Dieser Sitzbelegungssensor kann dabei die Sicherheit erhöhen, da beispielsweise schneller überprüft werden kann, ob ein Passagier angeschnallt ist. Der Reisekomfort kann für jeweilige Passagiere so aber nicht erhöht werden.

Auch die US 2015/351692 A1, DE 10 2014 223 629 A1, US 2004/122575 A1 und US 2017/283086 A1 beschreiben verschiedene Sitzsysteme. Das Dokument US 2015/351692 A1 stellt eine Sitzanordnung mit einem Sitzkissen, einer Rückenlehne und einer Kopfstütze bereit. Zur Erfassung der Sitzposition eines Insassen sind mehrere Sensoren funktionell mit dem Sitzkissen und/ oder der Rückenlehne verbunden. Ein Mediengerät ist vorhanden. Ein Controller steht in elektrischer Kommunikation mit den mehreren Sensoren und mit dem Mediengerät und ist dazu konfiguriert, Daten von den mehreren Sensoren zu empfangen, die Daten zu vergleichen, um festzustellen, ob der Insasse gleichmäßig sitzt, und das Mediengerät zu betreiben, um den Insassen über eine Sitzposition mit ungleichmäßiger Körperhaltung zu informieren.

Aufgabe der vorliegenden Erfindung ist es, den Reisekomfort in einem Passagierflugzeug zu verbessern.

Diese Aufgabe wird erfindungsgemäß jeweils durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen eines Aspekts als vorteilhafte Ausgestaltungen jeweiliger anderer Aspekte und umgekehrt anzusehen sind.

Ein erster Aspekt der Offenbarung betrifft ein Sitzsystem für ein Passagierflugzeug gemäß Anspruch 1.

Ein zweiter Aspekt der Offenbarung betrifft ein Verfahren zum Betreiben eines Sitzsystem für ein Passagierflugzeug gemäß Anspruch 3.

In weiterer vorteilhafter Ausgestaltung des ersten Erfindungsaspekts ist es vorgesehen, dass die Speichervorrichtung dazu ausgebildet ist, die erfasste Sitzbelastung, die bestimmte Sitzhaltung, den Verlauf der erfassten Sitzbelastung und/oder den Verlauf der bestimmten Sitzhaltung einem Passagieren und/oder einem jeweiligen Flugzeugsitztyp zugeordnet zu speichern.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehenden in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, so lange sie den Rahmen der beigefügten Ansprüche nicht verlassen.

### FIGURENBESCHREIBUNG

Fig. 1 veranschaulicht in einer schematischen Ansicht ein Sitzsystem für ein Passagierflugzeug.
Fig. 2 veranschaulicht in einem schematischen Flussdiagramm die Funktionsweise des Sitzsystems gemäß Fig. 1.
Fig. 3 zeigt in einer schematischen Perspektivansicht einen Flugzeugsitz.
Fig. 4 zeigt in einer schamtischen Schnittansicht ein Polster des Flugzeugsitzes gemäß Fig. 3.

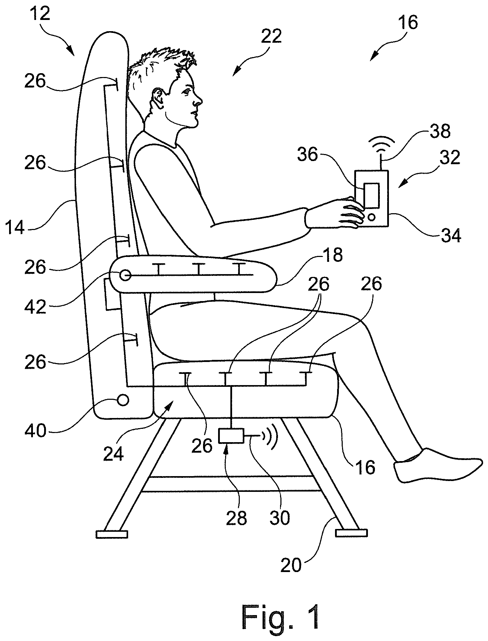

Fig. 1 veranschaulicht in einer schematischen Ansicht ein Sitzsystem 10 für ein Passagierflugzeug, welches einen Flugzeugsitz 12 aufweist. Der Flugzeugsitz 12 kann auch als Sitz 12 bezeichnet werden und umfasst dabei ein Rückenteil 14, welches auch als Rückenlehne bezeichnet werden kann, ein Sitzteil 16 und jeweilige Armlehnen 18. Das Rückenteil 14 umfasst dabei integriert eine Kopfstütze, welche hier auch als Teil der Rückenlehne angesehen werden kann. Der Flugzeugsitz 12 ist dabei lösbar mittels eines Gestells 20 an einem Boden der Passagierkabine des Passagierflugzeugs befestigt.

Auf dem Flugzeugsitz 12 sitzt ein Passagier 22 in einer bestimmten Sitzhaltung. Vorliegend ist beispielsweise dargestellt, wie der Passagier 22 an der Rückenlehne angelehnt ist und mindestens mit dem Ellenbogen eines seiner Arme auf der dargestellten Armlehne 18 aufgestützt ist. Auch der Kopf des Passagiers 22 ist an dem Rückenteil 14 angelehnt. Zudem sitzt der Passagier 22 auf dem Sitzteil 16, wobei ein Sitzschwerpunkt weit hinten Richtung dem Rückenteil 14 gegeben ist. Der Passagier 22 könnte aber auch anders auf dem Flugzeugsitz 12 sitzen. Beispielsweise könnte der Passagier 22 nach vorne gelehnt sein, sodass sein Rücken und Kopf das Rückenteil 14 nicht mehr berühren und ein Sitzschwerpunkt auf dem Sitzteil 16 nahe eines dem Rückenteil 14 abgewandten Ende verlagert ist.

Das Sitzsystem 10 umfasst dabei eine Sensorvorrichtung 24, welche dazu ausgebildet ist, eine Sitzbelastung des Flugzeugsitzes 12 durch den darauf sitzenden Passagier 22 zu erfassen. Die jeweilige Sitzbelastung ergibt sich dabei durch eine jeweilige Sitzhaltung und entspricht beispielsweise einer nach Bereichen aufgelösten Druckbelastung einer Rückenfläche des Rückenteils 14, einer Sitzfläche des Sitzteils 16 und einer Auflagefläche jeweiliger Armlehnen 18. Vorliegend kann also beispielsweise mittels der Sensorvorrichtung 24 erfasst werden, wo der Sitzschwerpunkt auf dem Sitzteil 16 ist und welche Kraft dabei auf das Sitzteil 16 wirkt. Gleiches kann für das Rückenteil 14 und jeweilige Armlehnen 18 erfasst werden.

Für diese Erfassung weist die Sensorvorrichtung 26 beispielsweise eine Vielzahl von voneinander beabstandeten Sensoren 26 auf. Die Sensoren 26 können beispielsweise als flächige textile Sensoren ausgebildet sein, welche die darauf wirkende Kraft durch eine Kapazitätsänderung oder Widerstandsänderung erfassen können. Solche textile Sensoren können dabei auch selber dazu ausgebildet sein, eine darauf wirkende Kraftverteilung zu erfassen, um die Sitzbelastung besonders genau bestimmen zu können. Optional kann dann auch beispielsweise ein Sensor 26 pro Sitzteil 16, Rückenteil 14 und Armlehne 18 vorgesehen sein und sich beispielsweise über im Wesentlichen die gesamte Sitzfläche, Rückenfläche und Auflagefläche erstrecken. Dadurch kann die Sitzbelastung besonders hochauflösend und genau erfasst werden. Durch - wie vorliegend gezeigt - mehrere voneinander beabstandete Sensoren 26 pro Sitzfläche, Rückenfläche und Auflagefläche kann die Sensorvorrichtung 24 besonders leicht sein. Jeweilige Werte bzw. Belastungen zwischen den Sensoren 26 können dabei beispielsweise gemittelt werden.

Die Sensoren 26 können beispielsweise durch einen Energiespeicher, wie eine Batterie, welche in oder an dem Flugzeugsitz 12 angeordnet ist, mit Strom versorgt werden. Alternativ oder zusätzlich können die jeweiligen Sensoren 26 auch an ein Boardnetz, beispielsweise eine Stromversorgung von Teilen eines Infotainment-Systems des Passagierflugzeugs, angeschlossen sein und darüber mit Strom versorgt werden. Alternativ können auch jeweilige Sensoren 26 verwendet werden, welche keinen Strom zum Erzeugen eines Sensorsignals benötigen. Beispielsweise können Piezosensoren verwendet werden, welche bei Druckbelastung ohne Stromquelle eine elektrische Spannung erzeugen kann. Eine solche Sensorvorrichtung 24 kann besonders wartungsarm sein.

Die Sensoren 26 sind dabei mit jeweiligen Leitungen mit einer zentralen Sendevorrichtung 28 verbunden, welche beispielsweise einen Sender 30 umfasst, welcher dazu ausgebildet ist, Sensorsignale mittels des Bluetooth-Low-Energy Standards zu verschicken. Die Sendevorrichtung 28 kann dabei jeweilige analoge Sensorsignale mittels eines integrierten A/D-Wandlers in digitale Signale umwandeln.

Mittels der Sendevorrichtung 28 können jeweilige Sensorsignale und damit die erfasste Sitzbelastung an eine Auswertvorrichtung 32 gesendet werden, welche vorliegend als Smartphone 34 des Passagiers 22 ausgebildet ist. Das Smartphone 34 umfasst dabei auch ein Anzeigegerät 36 in Form eines Bildschirms, einen Empfänger 38 zum Empfangen der von der Sendevorrichtung 28 übertragenen Sensorsignale und einen nicht dargestellten Massenspeicher.

Das Smartphone 34 bzw. die Auswertvorrichtung 32 ist dabei dazu ausgebildet, in Abhängigkeit von der erfassten Sitzbelastung eine Empfehlung für eine Veränderung der Sitzhaltung des Passagiers 22 zu bestimmen. Dafür kann das Smartphone 34 beispielsweise ein Programm, welches auch als App bezeichnet werden kann, ausführen, mittels welchem die Sensorsignale mit einem tabellarischen Vergleich ausgewertet werden, um zu bestimmen, ob eine Veränderung der Sitzhaltung für den Passagier 22 hinsichtlich Komfort oder gesundheitlichen Auswirkungen vorteilhaft ist. Dabei kann auch bestimmt werden, in welche Sitzhaltung der Passagier 22 vorteilhafterweise wechseln sollte.

Die so bestimmte Empfehlung kann dabei auf dem Anzeigegerät 36 mittels des Smartphone 34 angezeigt werden, beispielsweise in Form eines Piktogramms oder einer Animation. So kann der Passagier 22 dazu angeleitet werden, wie, wann und welche Sitzhaltungen dieser während eines Fluges einnehmen sollte, um den Sitzkomfort zu erhöhen und eine Gesundheitsbelastung durch langes Sitzen zu minimieren. Dadurch kann dem Passagier 22 auch geholfen werden, sein Sitzverhalten zu verbessern.

Mittels der erfassten Sitzbelastung kann die Auswertvorrichtung 32 auch eine derzeitige Sitzhaltung bestimmen und diese dem Passagier 22 auf dem Anzeigegerät 36 anzeigen. Dadurch kann das Verständnis für das Sitzverhalten erleichtert werden und dem Passagier 22 ggf. besser verdeutlicht werden, wie sein Sitzverhalten während des Fluges sein sollte.

Das Sitzsystem 10 kann auch einen zeitlichen Verlauf der Sitzbelastung und/oder Sitzhaltung erfassen und beispielsweise in dem Massenspeicher des Smartphone 34 speichern. Dadurch können auch zeitliche Faktoren, wie beispielsweise die Zeitdauer, in welcher der Passagier 22 in einer Sitzhaltung verharrt, bei der Bestimmung der Empfehlung berücksichtigt werden. Durch das Speichern können jeweilige erfasste Daten auch für spätere, umfangreichere und/oder für mehrere Passagiere akkumulierte Analysen genutzt werden.

Der Flugzeugsitz 12 kann auch eine Mechanik zum Verstellen einzelner Teile umfassen. Beispielsweise kann das Rückenteil 14 mittels eines Gelenks 40 an dem Gestell 20 gehalten sein, um eine Neigung der Rückenlehne verstellen zu können. Ebenso können jeweilige Armlehnen 18 mittels jeweils eines weiteren Gelenks 42 an dem Rückenteil 14 gehalten sein. Jeweilige Kabel zum Übertragen jeweiliger Sensordaten der Sensoren 26 können dabei durch diese Gelenke 40, 42 geführt sein, wie beispielsweise beim Gelenk 42 dargestellt.

Die Sensorvorrichtung 24 kann dabei dazu ausgebildet sein, die Stellung jeweiliger beweglicher bzw. verstellbarer Teile des Flugzeugsitzes 12 zu erfassen. Beispielsweise kann die Sensorvorrichtung 24 einen Stellungssensor umfassen, mittels welchem die Stellungen der jeweiligen Gelenke 40, 42 erfasst werden. Die erfasste Stellung jeweiliger beweglicher bzw. verstellbarer Teile des Flugzeugsitzes 12 kann dabei bei der Erfassung der Sitzbelastung und/oder der Bestimmung der derzeitigen Sitzhaltung von der Auswertvorrichtung 32 mit berücksichtigt werden. Dadurch kann hier die Genauigkeit verbessert werden. Zudem kann auch die Empfehlung zur Veränderung der Sitzhaltung mit in Abhängigkeit der erfassten Stellung jeweiliger beweglicher bzw. verstellbarer Teile des Flugzeugsitzes 12 von der Auswertvorrichtung 32 bestimmt werden. Die Empfehlung kann dabei dann auch eine Empfehlung zum Verstellen jeweiliger beweglicher bzw. verstellbarer Teile des Flugzeugsitzes 12 mit umfassen oder beispielsweise auch nur die Einnahme solcher Sitzhaltungen empfehlen, welche keine Verstellung dieser Teile erfordert.

Das Smartphone 34 kann optional auch dazu ausgebildet sein, jeweilige erfasste Daten und/oder Empfehlungen an einen zentralen Server zu senden, um diese auch dort zu speichern. So stehen diese gespeicherten Informationen der Fluggesellschaft zur weiteren Nutzung zur Verfügung und/oder können zentral eingesehen werden, beispielsweise durch jeweilige Flugbegleiter in einem Kabinenkontrollsystem. Dadurch kann auch eine Sitzbelegung mit erfasst werden. Das Sitzsystem 10 kann darüber hinaus auch mehrere Flugzeugsitze 12 mit jeweils zugeordneten Sensorvorrichtungen 24 umfassen, wobei jeweilige Daten und/oder jeweilige Empfehlungen eines individuellen Passagiers nur diesem auf seinem Smartphone zugänglich gemacht werden können.

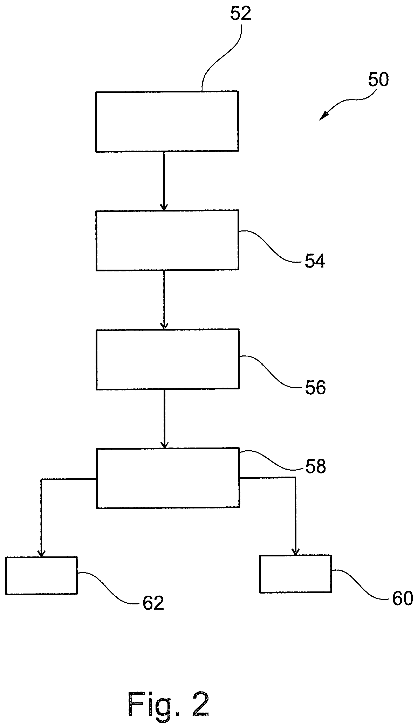

Fig. 2 veranschaulicht in einem schematischen Flussdiagramm 50 die Funktionsweise des Sitzsystems 10 gemäß Fig. 1. Block 52 veranschaulicht die Übertragung erfasster Sensordaten - also Signale, welche Rückschlüsse auf die Sitzbelastung zulassen bzw. diese erfassen - als elektrische Signale von den Sensoren an den A/D-Wandler des Datenübetragungsmoduls bzw. die Sendevorrichtung 28. In Block 54 wird die Umwandlung dieser analogen elektrischen Signale in digitale Signale und in Block 56 deren Übertragung an die Auswertvorrichtung 32 veranschaulicht, wobei die Übertragung vorzugsweise kabellos erfolgt. Die Auswertung der übertragenen Daten wird in Block 58 veranschaulicht, wobei in diesem Schritt anhand der erfassten Sitzbelastung und optional zusätzlich deren zeitlichen Verlauf, welche auch als Sitzhistorie bezeichnet wird, mittels der Auswertvorrichtung 32 eine Empfehlung für eine Veränderung der Sitzhaltung des Passagiers 22 bestimmt wird. Diese Empfehlung kann dabei auch eine Art Prognose umfassen, beispielsweise dass dem Passagier 22 nach weiterem Verbleib einer vorbestimmten Zeitdauer in einer derzeitigen Sitzposition der Wechsel in eine andere, insbesondere vorbestimmte Position empfohlen wird.

Block 60 veranschaulicht dann, dass die Empfehlung an den Passagier 22 ausgegeben wird, beispielsweise in Form einer Animation auf dem Bildschirm seines Smartphones 34. Block 62 veranschaulicht, dass jeweilige ausgegebene Empfehlungen und/oder erfasste Sitzbelastungen und/oder Sitzhaltungen, insbesondere deren zeitlicher Verlauf, gespeichert werden, beispielsweise auf einem zentralen Server und/oder auf dem Smartphone 34 des jeweiligen Passagiers.

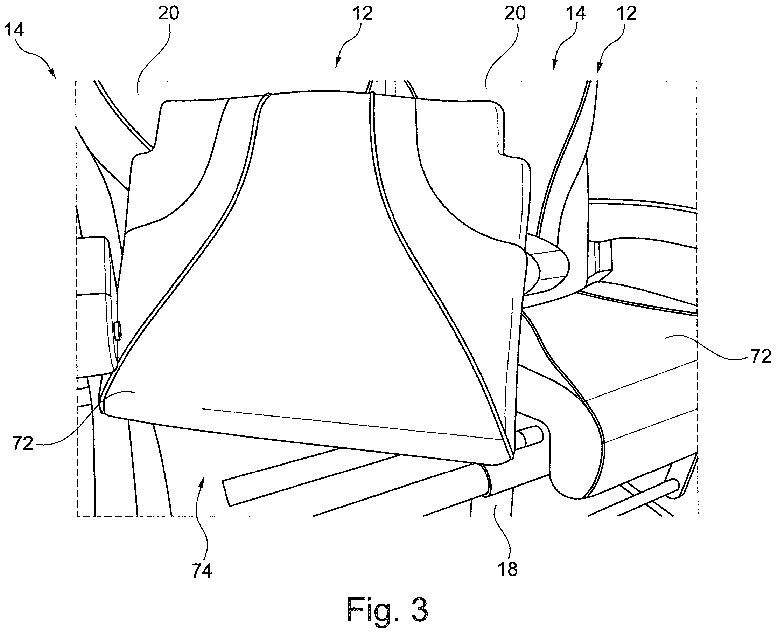

Fig. 3 zeigt in einer schematischen Perspektivansicht zwei des in Fig. 1 schematisch dargestellten Flugzeugsitzes 12 als eine Sitzreihe. Gut erkennbar ist dabei, dass das Rückenteil 14 ein Rückenpolster 70 aufweist und das Sitzteil 16 ein Sitzpolster 72. Bei dem in der Fig. 3 links dargestellten Flugzeugsitz 12 ist dabei das Sitzpolster 72 von dem Gestell 20 abgelöst. Ebenso kann auch das Rückenpolster 70 lösbar mit einem weiteren Teil des Gestells 20 verbunden sein.

Das Sitzpolster liegt normal auf einem Sitzbereich 74 des Gestells 20 auf, welcher bei dem links dargestellten Flugzeugsitz 12 zu erkennen ist. Jeweilige Sensoren 26 können beispielsweise zwischen dem Sitzpolster 72 und dem Sitzbereich 74 des Gestells 20 angeordnet sein. Beispielsweise kann der Sitzbereich 74 aber auch als Sitztrampolin ausgebildet sein, welches vorzugsweise ebenfalls eine gewisse Dämpfung durch eine wenigstens bereichsweise Elastizität bereitstellen kann. Im Bereich eines Sitztrampolins kann das Gestell 20 deshalb auch eine textile Fläche statt einer Kunststoff- oder Aluminiumplatte aufweisen. Dadurch kann ein entsprechender Sitz besonders leicht und platzsparend sein. Vorteilhafterweise kann zur weiteren Gewichtseinsparung der textile Bereich des Sitztrampolins durch einen textilen Sensor gebildet sein, sodass der Flugzeugsitz 12 des Sitzsystems 10 gegenüber herkömmlichen Sitzen kaum oder nur geringfügig schwerer ist.

Durch die lösbare Befestigung jeweiliger Polster des Flugzeugsitzes 12 können jeweilige Sensoren 26 und damit das Sitzsystem 10 bei bestehender Innen- und insbesondere Sitzausstattung des Passagierflugzeugs leicht nachgerüstet werden. Auch eine Wartung ist so vereinfacht.

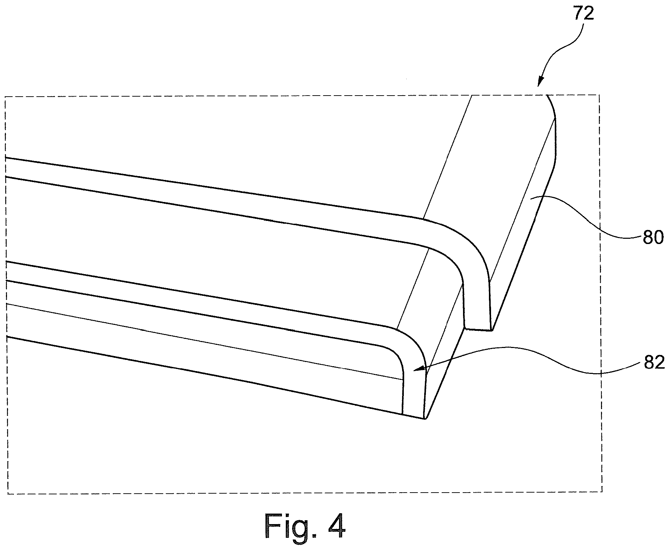

Fig. 4 zeigt in einer schematischen Schnittansicht einen beispielhaften Schichtaufbau des Sitzpolsters 72 des Flugzeugsitzes 12. Das Sitzpolster 72 weist dabei eine Deckschicht 80 und mehrere Schaumstoffschichten 82 als Kern auf. Die Schaumstoffschichten 82 stellen dabei hauptsächlich die Sitzdämpfung bereit, während die Deckschicht 80 den Kern abkapselt und vor Umwelteinflüssen schützt. Jeweilige Sensoren 26 und auch deren Verbindungskabel zur Sendevorrichtung 28 können dabei in einer Ausnehmung im Kern angeordnet sein und/oder auch zwischen den jeweiligen Schichten des Kerns des Sitzpolsters 72. So ist eine einfache Nachrüstung und/oder Modifikation bestehender Sitzpolsterkonstruktionen einfach möglich. Alternativ kann ein flächiger Sensor auch als jeweilige zusätzliche Schicht zwischen den Schaumstoffschichten 82 und/oder der Deckschicht 80 vorgesehen sein. Alternativ kann auch die Deckschicht 80 selber durch einen Sensor 26 ganz oder teilweise gebildet sein. Dafür eignet sich insbesondere ein textiler Sensor. In diesem Fall kann die Sitzbelastung besonders präzise erfasst werden, da jeweilige Polsterschichten eine Druckbelastung nicht dämpfen, flächig verteilen und/oder anderweitig verfälschen können.

Flugzeugsitze 12 gehören zu den wichtigsten komfortrelevanten Elementen eines jeden Passagierflugzeugs, weil sie im unmittelbaren Kontakt zum Passagier 22 stehen und der Passagier 22 die meiste Zeit seiner Flugreise auf dem Sitz verbringt. Inzwischen können aufgrund der modernen Langstreckenflugzeuge Non-Stop-Flugreisen von bis zu 18 Stunden durchgeführt werden, bei denen der Passagier 22 sich zum großen Teil in der Sitzposition befindet.

Das Sitzsystem 10 ermöglicht es dabei, dass der Passagier 22 Feedback zu seinem Sitzverhalten erhalten kann, insbesondere ob das Sitzverhalten schlecht und/oder ungesund ist. Der Passagier 22 kann dazu animiert werden, gesünder zu sitzen, wobei der Passagier 22 nicht mehr mühsam seine Sitzhaltung selbst kontrollieren muss.

Bedingt durch den ständigen Kostendruck sind Fluggesellschaften bestrebt Treibstoffverbräuche ständig zu reduzieren, wobei Gewichtsersparnisse in Flugzeugen ein entscheidendes Kriterium ist, um Treibstoffkosten zu senken. Dabei wurde in den letzten Jahren auch viel an den Sitzen und an den Sitzschäumen sowohl an Gewicht als auch an Material gespart. Das hat dazu geführt, dass heutige Flugzeugsitze eine sehr dünne Schicht an Sitzschaum besitzen, so dass eine größere Beanspruchung der Wirbelsäule und Muskeln des Passagiers 22 erfolgt. Ein intelligentes, selbstüberwachendes Sitzhaltung-ÜberwachungsSystem, wie es durch Sitzsystem 10 realisiert wird, vermag die Wirbelsäule und Muskeln des Passagiers zu entlasten, ein größeres Wohlbefinden des Passagiers 22 hervorzurufen und einen nachhaltig besseren Eindruck der Airline herbeizuführen. Gegebenenfalls sind durch ein angepasstes Sitzverhalten auch noch weitere Material- und Gewichtseinsparungen möglich. Jeweilige Empfehlungen des Sitzsystems 10 können deshalb an die spezifische Gestaltung des Flugzeugsitzes 12 angepasst sein, welcher gegebenenfalls in gewissen Sitzhaltungen bequemer ist und/oder langsamer verschleißt als in anderen Sitzhaltungen. Die deswegen vorteilhaften Sitzhaltungen können dabei bevorzugt oder ausschließlich empfohlen werden.

Eine nachhaltige Bindung des Passagiers 22 an die Airline kann dadurch erreicht werden, dass dem Passagier 22 auch in der Airline-App sein gesamtes Sitzverhalten während seiner letzten Flüge aufgezeigt wird, Hinweise und Anregungen zu einer Stärkung der Rückenmuskulatur gegeben werden und evtl. Verbesserungen oder Verschlechterungen der Sitzhaltung im Laufe der Zeit aufgezeigt werden. Auch dies kann mit dem Sitzsystem 10 leicht realisiert werden, da bereits die Auswertung des Sitzverhaltens mittels des Smartphones 34 des Passagiers 22 erfolgen kann.

Des Weiteren kann das Sitzsystem 10 dazu verwendet werden, die Sitzbelegung zu kontrollieren. In unruhigen Flugphasen, beispielsweise bei Turbulenzen, Start und/oder Landung, können jeweilige Flugbegleiter aus der Ferne, beispielsweise über eine spezielle App und/oder ein Kabinenkontrollsystem, erkennen, wenn ein Sitz trotz Anweisung verlassen wird. Insbesondere bei einer Kombination des Sitzsystems 10 mit dem sogenannten "Smart Belt" der Aircraft Cabin Modification GmbH ist eine zuverlässige Überwachung und Nachhaltung der Anschnallsituation eines Passagiers 22 während des gesamten Fluges möglich. Dazu können jeweilige Daten, wann ein Flugzeugsitz 12 belegt war mit jeweiligen Daten, wann ein Anschnallgurt geschlossen war, abgeglichen werden.

Das Sitzsystem 10 kann modular für jeweilige Flugzeugsitze eines Passagierflugzeugs eingebaut und/oder nachgerüstet werden. Das Sitzsystem 10 kann ein Sitz-Informationssystem zur Verfügung stellen, welches eine Übersicht über die Sitzhaltung jeweiliger Passagiere erfasst, diese graphisch darstellen kann und/oder jeweiligen Flugbegleitern die Sitzbelegung darstellen kann. Das Sitzsystem 10 ist deshalb aus gesundheits- und sicherheitstechnischen Gründen vorteilhaft. Es kann die gesundheitliche Belastung von Langstreckenflügen reduzieren und die Arbeitsbelastung für das Flugbegleitpersonal reduzieren sowie die Sicherheit an Bord steigern.

Zu diesem Zweck kann bei dem Sitzsystem 10 ein eindeutiges Signal, beispielsweise in Form des elektrischen Widerstandes jeweiliger Sensoren 26, generiert werden, welches Rückschlüsse auf die Kraftübertragung zwischen dem Passagier 22 und jeweiligen Flächen des Flugzeugsitzes 12, insbesondere dessen Sitzschaum, ermöglicht. Daraus kann das Sitzsystem 10 ableiten, ob der Fluggast eine korrekte und/oder gesunde Sitzhaltung eingenommen hat. Dazu können ein oder mehreren Sensoren 26 vorgesehen sein, die beispielsweise mechanisch oder als induktiver Näherungsschalter funktionieren und im Sitzschaum integriert sind. Durch die Messung z.B. des elektrischen Widerstandes im Sensor 26 kann dann beispielsweise erfasst werden, an welcher Stelle des Flugzeugsitzes 12 der Passagier 22 gerade seinen Schwerpunkt hat. Beispielsweise ist an einem nicht belasteten Bereich des Sitzschaumes der Widerstand gering, in einem belasteten Bereich hingegen hoch. Das Sitzsystem 10 und insbesondere einzelne Komponenten können dabei mit einem insbesondere sitzintegrierten In-Flight-Entertainment-System, welches auch als Infotainment-System bezeichnet werden kann, gekoppelt sein, beispielsweise zur Datenübertragung und/oder Stromversorgung. Teile des In-Flight-Entertainment-System können auch Teile des Sitzsystems 10 darstellen, beispielsweise können jeweilige Bildschirme als Anzeigegerät 32 fungieren. Alternativ oder zusätzlich können das Sitzsystem 10 und insbesondere einzelne Komponenten auch über eine autonome Energieversorgung verfügen, beispielsweise in Form einer Knopfzelle.

Das Sitzsystem 10 bzw. die Auswertvorrichtung 32 ist dazu ausgebildet, in Abhängigkeit von der erfassten Sitzbelastung, der bestimmten Sitzhaltung, des Verlaufs der erfassten Sitzbelastung und/oder des Verlaufs der bestimmten Sitzhaltung, zu ermitteln, wie wohl sich der Passagier 22 auf dem Flugzeugsitz 12 fühlt. Diese Daten können dazu genutzt werden, den Reisekomfort weiter zu steigern. Die Daten können dem Passagier 22 und/oder dem Flugzeugsitz 12 individuell zugeordnet gespeichert werden. So können gezielt Verbesserungen des Wohlfühlens für den Passagier 22 eingeleitet werden und jeweilige Sitze optimiert bzw. weiterentwickelt werden oder durch komfortablere Sitze ersetzt werden. Das Wohlfühlen des Passagiers 22 auf dem Flugzeugsitz 12 kann beispielsweise in Abhängigkeit davon bestimmt werden, wie oft sich der Passagier 22 bewegt, wie stark sich der Passagier 22 bewegt, auf welche Art sich der Passagier 22 bewegt, wie oft und/oder wie lange der Passagier 22 schläft und/oder wie oft der Passagier 22 aufsteht. Auch diese Daten können zur Auswertung gespeichert werden.

### BEZUGSZEICHENLISTE

- 10: Sitzsystem
- 12: Flugzeugsitz
- 14: Rückenteil
- 16: Sitzteil
- 18: Armlehne
- 20: Gestell
- 22: Passagier
- 24: Sensorvorrichtung
- 26: Sensor
- 28: Sendevorrichtung
- 30: Sender
- 32: Auswertvorrichtung
- 34: Smartphone
- 36: Anzeigegerät
- 38: Empfänger
- 40: Gelenk
- 42: Gelenk
- 50: Flussdiagramm
- 52: Block
- 54: Block
- 56: Block
- 58: Block
- 60: Block
- 62: Block
- 70: Rückenpolster
- 72: Sitzpolster
- 74: Sitzbereich
- 80: Deckschicht
- 82: Schaumstoffschichten

## Patentansprüche

1. Sitzsystem (10) für ein Passagierflugzeug, umfassend
- wenigstens einen Flugzeugsitz (12) mit wenigstens einer Sensorvorrichtung (24), welche dazu ausgebildet ist, eine Sitzbelastung des Flugzeugsitzes (12) durch einen darauf sitzenden Passagier (22) zu erfassen,
- eine Speichervorrichtung, welche dazu ausgebildet ist, die erfasste Sitzbelastung, eine bestimmte Sitzhaltung, einen Verlauf der erfassten Sitzbelastung und/oder einen Verlauf der bestimmten Sitzhaltung zu speichern, und
- eine Auswertvorrichtung (32), welche dazu ausgebildet ist, in Abhängigkeit von der erfassten Sitzbelastung, der bestimmten Sitzhaltung, des Verlaufs der erfassten Sitzbelastung und/oder des Verlaufs der bestimmten Sitzhaltung zu ermitteln, wie wohl sich der Passagier (22) auf dem Flugzeugsitz (12) fühlt, wobei das Wohlfühlen des Passagiers (22) auf dem Flugzeugsitz (12) in Abhängigkeit davon bestimmt wird, wie oft sich der Passagier (22) bewegt, wie stark sich der Passagier (22) bewegt, auf welche Art sich der Passagier (22) bewegt, wie oft und/oder wie lange der Passagier (22) schläft und/oder wie oft der Passagier (22) aufsteht.

2. Sitzsystem (10) für ein Passagierflugzeug nach Anspruch 1,
wobei die Speichervorrichtung dazu ausgebildet ist, die erfasste Sitzbelastung, die bestimmte Sitzhaltung, den Verlauf der erfassten Sitzbelastung und/oder den Verlauf der bestimmten Sitzhaltung individuellen Passagieren und/oder einem jeweiligen Flugzeugsitztyp zugeordnet zu speichern.

3. Verfahren zum Betreiben eines Sitzsystem (10) in einem Passagierflugzeug, umfassend wenigstens die Schritte:
- Erfassen einer Sitzbelastung eines Flugzeugsitzes (12) in einem Passagierflugzeug durch einen darauf sitzenden Passagier (22) mittels einer Sensorvorrichtung (24),
- Speichern der erfassten Sitzbelastung, einer bestimmten Sitzhaltung, eines Verlaufs der erfassten Sitzbelastung und/oder eines Verlaufs der bestimmten Sitzhaltung, insbesondere zugeordnet zu einem individuellen Passagier und/oder einem jeweiligen Flugzeugsitztyp, und
- Ermitteln in Abhängigkeit von der erfassten Sitzbelastung, der bestimmten Sitzhaltung, des Verlaufs der erfassten Sitzbelastung und/oder des Verlaufs der bestimmten Sitzhaltung, wie wohl sich der Passagier auf dem Flugzeugsitz fühlt, wobei das Wohlfühlen des Passagiers auf dem Flugzeugsitz in Abhängigkeit davon bestimmt wird, wie oft sich der Passagier bewegt, wie stark sich der Passagier bewegt, auf welche Art sich der Passagier bewegt, wie oft und/oder wie lange der Passagier schläft und/oder wie oft der Passagier aufsteht.

## Claims

1. A seating system (10) for a passenger aircraft, comprising
- at least one aircraft seat (12) having at least one sensor device (24) which is configured to detect a seat load on the aircraft seat (12) by a passenger (22) sitting thereon,
- a storage device which is configured to store the detected seat load, a determined sitting posture, a history of the detected seat load and/or a history of the determined sitting posture, and
- an evaluation device (32) which is configured to ascertain how well the passenger (22) feels on the aircraft seat (12) depending on the detected seat load, the determined sitting posture, the history of the detected seat load and/or the history of the determined sitting posture, wherein the sense of well-being of the passenger (22) on the aircraft seat (12) is determined depending on how often the passenger (22) moves, how intensely the passenger (22) moves, in which way the passenger (22) moves, how often and/or how long the passenger (22) sleeps and/or how often the passenger (22) stands up.

2. A seating system (10) for a passenger aircraft according to claim 1,
wherein the storing device is configured to store the detected seat load, the determined sitting posture, the history of the detected seat load and/or the history of the determined sitting posture in a manner assigned to an individual passenger and/or a respective aircraft seat type.

3. A method for operating a seating system (10) for a passenger aircraft, comprising at least the steps of:
- detecting a seat load of an aircraft seat (12) in a passenger aircraft by a passenger (22) sitting thereon by means of a sensor device (24),
- storing the detected seat load, a determined sitting posture, a history of the detected seat load and/or a history of the determined sitting posture, in particular in a manner assigned to an individual passenger and/or a respective aircraft seat type, and
- ascertaining how well the passenger feels on the aircraft seat depending on the detected seat load, the determined sitting posture, the history of the detected seat load and/or the history of the determined sitting posture, wherein the sense of well-being of the passenger on the aircraft seat is determined depending on how often the passenger moves, how intensely the passenger moves, in which way the passenger moves, how often and/or how long the passenger sleeps and/or how often the passenger stands up.

## Revendications

1. Système de siège (10) pour un avion de transport de passagers, comprenant
- au moins un siège d'avion (12) avec au moins un dispositif de capteur (24), lequel est conçu pour détecter une charge de siège du siège d'avion (12) par un passager (22) assis dessus,
- un dispositif de mémorisation, lequel est conçu pour mémoriser la charge de siège détectée, une position assise déterminée, une évolution de la charge de siège détectée et/ou une évolution de la position assise déterminée, et
- un dispositif d'évaluation (32), lequel est conçu pour établir un niveau de bien-être du passager (22) sur le siège d'avion (12) en fonction de la charge de siège détectée, de la position assise déterminée, de l'évolution de la charge de siège détectée et/ou de l'évolution de la position assise déterminée, dans lequel le bien-être du passager (22) sur le siège d'avion (12) est déterminé en fonction du nombre de fois où le passager (22) bouge, de l'intensité avec laquelle le passager (22) bouge, de quelle manière le passager (22) bouge, du nombre de fois où et/ou de la durée pendant laquelle le passager (22) dort et/ou du nombre de fois où le passager (22) se lève.

2. Système de siège (10) pour un avion de transport de passagers selon la revendication 1,
dans lequel le dispositif de mémorisation est conçu pour mémoriser la charge de siège détectée, la position assise déterminée, l'évolution de la charge de siège détectée et/ou l'évolution de la position assise déterminée attribuées à des passagers individuels et/ou à un type de siège d'avion respectif.

3. Procédé pour faire fonctionner un système de siège (10) dans un avion de transport de passagers, comprenant au moins les étapes de :
- détection d'une charge de siège d'un siège d'avion (12) dans un avion de transport de passagers par un passager (22) assis dessus au moyen d'un dispositif de capteur (24),
- mémorisation de la charge de siège détectée, d'une position assise déterminée, d'une évolution de la charge de siège détectée et/ou d'une évolution de la position assise déterminée, en particulier attribuées à un passager individuel et/ou à un type de siège d'avion respectif, et
- établissement du niveau de bien-être du passager sur le siège d'avion en fonction de la charge de siège détectée, de la position assise déterminée, de l'évolution de la charge de siège détectée et/ou de l'évolution de la position assise déterminée, dans lequel le bien-être du passager sur le siège d'avion est déterminé en fonction du nombre de fois où le passager bouge, de l'intensité avec laquelle le passager bouge, de quelle manière le passager bouge, du nombre de fois où et/ou de la durée pendant laquelle le passager dort et/ou du nombre de fois où le passager se lève.
